# EUROPEAN PATENT SPECIFICATION

(11) **EP 3 859 132 B1**
(45) Date of publication and mention of the grant of the patent: **17.04.2024**
(21) Application number: 19864025.2
(22) Date of filing: 25.09.2019
(51) Int. Cl.: F01P 11/10, B60K 11/04, F01P 5/06, F01P 3/18, F02B 29/04

(54) **FAN GUIDE UNIT**
LÜFTERFÜHRUNGSEINHEIT
UNITÉ DE GUIDAGE DE VENTILATEUR

(30) Priority: 26.09.2018 JP 2018180062
(43) Date of publication of application: 04.08.2021
(73) Proprietor: Tokyo Radiator Mfg. Co., Ltd., Fujisawa-shi, Kanagawa 252-0816 (JP)
(72) Inventor: SUZUKI Takuma, Fujisawa-shi, Kanagawa 252-0816 (JP)
(74) Representative: Ipsilon
(86) International application number: PCT/JP2019/037521
(87) International publication number: WO 2020/067123

(56) References cited:
- DE-A1- 10 342 524
- DE-C1- 3 723 714
- JP-A- 2006 097 545
- JP-A- 2017 081 244
- JP-A- 2017 081 244
- JP-U- S6 057 737
- JP-U- H03 122 231
- JP-U- S59 167 919
- KR-A- 20080 028 200
- US-A1- 2014 147 257

## Description

### TECHNICAL FIELD

The present disclosure relates to a fan guide unit.

### BACKGROUND ART

A cooling fan which sucks cooling air is placed behind a heat exchanger (for example, radiator) of a vehicle to increase heat dissipation. In addition, a fan guide unit is attached to a rear surface of the radiator to rectify the cooling air sucked by the cooling fan and increase the efficiency of ventilation to the radiator.

The fan guide unit has a fan guide and a fan cover. The fan guide is mounted so as to cover the rear surface of the radiator and also has a substantially circular opening portion which guides the cooling air from the radiator to the rear. The fan cover has an annual portion and is attached to the opening portion of the fan guide. The fan cover connects between the fan guide and the fan ring (not illustrated) surrounding the cooling fan to prevent leakage of the cooling air.

In Patent Document 1, a fan cover is attached to an opening portion of a fan guide by fitting a projected portion formed along a periphery of the opening portion of the fan guide to a pinch portion formed along a periphery of the fan cover. In addition, by fitting a fitting portion of the fan cover to four parts which are provided on a front side (radiator side) of the projected portion of the fan guide and are recessed in a central direction, a rotation of the fan cover due to engine vibration or the like is suppressed.

In Patent Document 2, a fan cover is attached to an opening portion of a fan guide by fitting a fitting portion formed along a periphery of the opening portion of the fan guide to a plurality of stoppers provided at equal intervals in a circumferential direction of the fan cover. In addition, a hemispherical bulge portion provided on the stopper of the fan cover is fitted into a mounting hole provided in the fitting portion of the fan guide to prevent the fan cover from coming off in a centrifugal direction.

### PRIOR ART DOCUMENT - PATENT DOCUMENT

[Patent Document 1]: JP-A-2017-81244 about a fan cover mounting structure
[Patent Document 2]: JP-A-2012-97589
It is also known in the art from US2014-147257 a fan shroud and seal ring assembly, and from DE3723714 an air guide housing for a radiator of an internal combustion engine.

### SUMMARY OF THE INVENTION

### PROBLEMS THAT THE INVENTION IS TO SOLVE

However, in a mounting structure of the fan cover of Patent Document 2, when a force is applied in a rotation direction, the bulging portion of the fan cover may come off from the mounting hole of the fan guide and rotate. Further, in the mounting structure of the fan cover of Patent Document 1, when a strong force is applied in the rotation direction, the fitting portion of the fan cover may ride on a periphery of a recess portion of the fan guide and rotate. Therefore, the structure which suppresses the rotation of the fan cover still had room for improvement.

It is an object of the present disclosure to provide a fan guide unit capable of suppressing a rotation of a fan cover.

### MEANS FOR SOLVING THE PROBLEMS

A fan guide unit for a heat exchanger according to an aspect of the present disclosure includes:
a fan guide including: a fitting portion provided along a circumferential direction on a periphery of an opening portion; and at least one protrusion provided on the fitting portion and protruding in a direction intersecting the circumferential direction; and
a fan cover having a fitted portion provided corresponding to the fitting portion of the fan guide, where
the fitted portion of the fan cover is provided with at least one through-hole provided corresponding to the protrusion of the fan guide.

According to the configuration described above, the rotation of the fan cover can be suppressed by fitting the protrusion provided in the fan guide into the through-hole provided in the fan cover.

According to the invention, the opening portion of the fan guide is substantially circular,
the fitting portion extends in a radial direction from the periphery of the opening portion, and
the protrusion extends in the radial direction from a tip of the fitting portion.

According to the configuration described above, the direction in which the fitted portion is fitted into the fitting portion and the direction in which the through-hole is fitted into the protrusion are the same radial direction, so that the mounting workability of the fan cover is improved.

The protrusion of the fan guide may have a substantially rectangular shape in a cross section in the circumferential direction, and
a width in the circumferential direction may be larger than a length in the radial direction.

According to the configuration described above, the rigidity of the protrusion in the rotation direction can be increased. In addition, it is possible to prevent the protrusion from coming out of the through-hole in the radial direction.

The fan cover may have an annular portion and the fitted portion may be provided on a periphery of the annular portion along the circumferential direction, and
a width in the circumferential direction of the through-hole of the fan cover may be greater than a width in the circumferential direction of the fitting portion side of the protrusion of the fan guide.

According to the configuration described above, even when a displacement or shape error occurs in the circumferential direction between the through-hole and the protrusion, the protrusion can be fitted into the through-hole. In addition, the fitting portion and the fitted portion are fitted at both ends of the through-hole in the circumferential direction. Therefore, even when there is a gap between the protrusion and the through-hole, the gap is closed by the surrounding fitting portion and the fitted portion, so that the cooling air can be prevented from leaking from the gap.

The fan cover may have an annular portion and the fitted portion may be provided on a periphery of the annular portion along the circumferential direction,
the protrusion of the fan guide may have a larger width in the circumferential direction on a tip side than a width in the circumferential direction on the fitting portion side in a cross section in the circumferential direction, and
a through-hole of the fan cover may have a width in the circumferential direction larger than a minimum width in the circumferential direction of the protrusion of the fan guide and smaller than a maximum width in the circumferential direction of the protrusion in the fan guide.

According to the configuration described above, even when a displacement or shape error occurs in the circumferential direction between the through-hole and the protrusion, the protrusion can be fitted into the through-hole. In addition, the fitting portion and the fitted portion are fitted at both ends of the through-hole in the circumferential direction. Therefore, even when there is a gap between the protrusion and the through-hole, the gap is closed by the surrounding fitting portion and the fitted portion, so that the cooling air can be prevented from leaking from the gap. In addition, it is possible to further prevent the protrusion from coming out of the through-hole in the radial direction.

The protrusion of the fan guide may have a rib and at least a part of the rib may be exposed from the fan cover when the fan cover is attached to the fan guide.

According to the configuration described above, it is possible to determine whether the fan cover is correctly attached to the fan guide by checking whether the rib is visible after the fan cover is attached.

The rib may extend in the circumferential direction and the entire rib may be exposed from the fan cover when the fan cover is attached to the fan guide.

According to the configuration described above, the entire rib extending in the circumferential direction is exposed from the fan cover, so that the rib can be easily visually recognized. In addition, it is possible to prevent the protrusion from coming out of the through-hole in the radial direction.

The fan cover may be made of an elastic body, and
the protrusion of the fan guide may be located in a lower part of the fan guide.

According to the configuration described above, the mounting work performed while extending the fan cover itself is usually performed from a lower part of the fan guide. Therefore, in an initial stage of mounting, the protrusion is inserted into the through-hole and caught and the fan cover can be easily mounted.

The fan guide may have three of the protrusions and the three protrusions may be provided in a lower half area of the fan guide.

According to the configuration described above, the fan guide has the three protrusions, and thus the rotation of the fan cover can be further suppressed. Also, in an initial stage of mounting, the three protrusions are plugged into the three through-holes and caught, making it easier to mount the fan cover.

The lower half area of the fan guide is the area located further in a lower side than a center of the fan guide in the up-down direction.

### ADVANTAGEOUS EFFECTS OF THE INVENTION

According to the present disclosure, it is possible to provide a fan guide unit capable of suppressing a rotation of a fan cover.

### BRIEF DESCRIPTION OF THE DRAWINGS

Fig. 1 is a perspective view for illustrating an overall configuration of a heat exchanger to which a fan guide unit according to an embodiment is attached.
Fig. 2A is a diagram illustrating the fan guide unit according to the embodiment.
Fig. 2B is a diagram illustrating a state (fan guide) in which a fan cover is removed from the fan guide unit of Fig. 2A.
Fig. 3A is a partially enlarged perspective view of a lower part of the fan guide unit of Fig. 2A.
Fig. 3B is a cross-sectional perspective view taken along the line A-A of the fan guide unit of Fig. 3A.
Fig. 4 is a schematic view for illustrating a protrusion of a fan guide.
Fig. 5A is a cross-sectional perspective view taken along the line B-B of the fan guide unit of Fig. 3B.
Fig. 5B is a cross-sectional perspective view illustrating a state (fan guide) in which the fan cover is removed from the fan guide unit of Fig. 5A.
Fig. 6A is a partially enlarged perspective view of a lower part of a fan guide unit according to a modification example.
Fig. 6B is a cross-sectional view taken along the line C-C of the fan guide unit of Fig. 6A.
Fig. 7A is a schematic view for illustrating a modification example of the protrusion.
Fig. 7B is a schematic view for illustrating another modification example of the protrusion.
Fig. 7C is a schematic view for illustrating still another modification example of the protrusion.

### MODES FOR CARRYING OUT THE INVENTION

Hereinafter, an embodiment (hereinafter, referred to as the present embodiment) of the present disclosure will be explained with reference to the drawings. The dimensions of each member illustrated in the drawings may differ from the actual dimensions of each member for convenience of explanation.

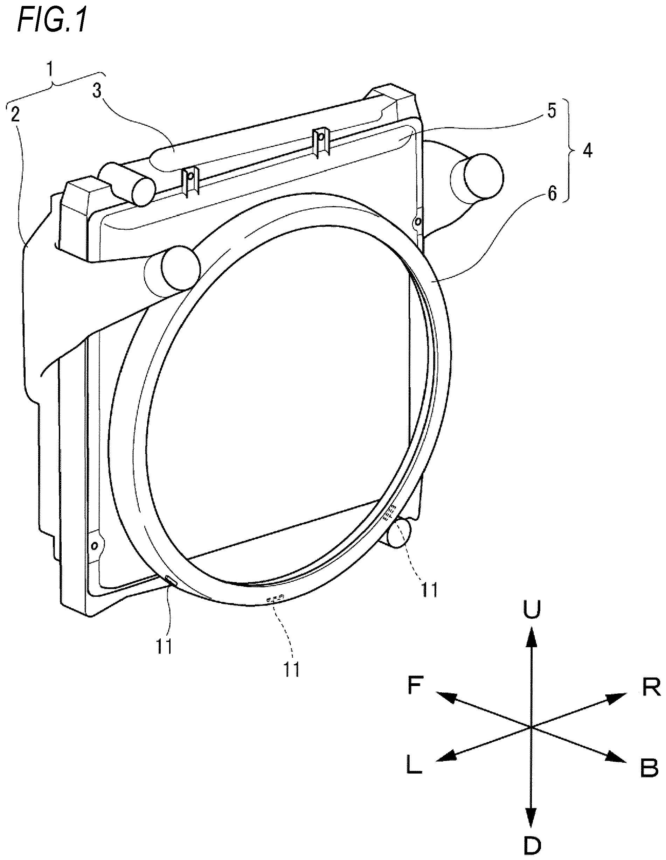

In the description of the present embodiment, for convenience of explanation, the "left-right direction", "up-down direction", and "front-rear direction" are appropriately referred to. Those directions are relative directions set for a fan guide unit 4 illustrated in Fig. 1. Those directions correspond to directions in which a heat exchanger 1 to which the fan guide unit 4 is attached is installed in a vehicle. Here, the "left-right direction" is a direction including a "left direction" and a "right direction". The "up-down direction" is a direction including an "upward direction" and a "downward direction". The "front-rear direction" is a direction including a "forward direction" and a "rearward direction". The front-rear direction is a direction orthogonal to the up-down direction. The left-right direction is a direction orthogonal to the front-rear direction and the up-down direction. In the accompanied drawings, an arrow U indicates the upward direction, an arrow D indicates the downward direction, an arrow L indicates the left direction, an arrow R indicates the right direction, an arrow F indicates the forward direction, and an arrow B indicates the rearward direction.

### <Overall configuration of heat exchanger with fan guide unit>

Fig. 1 is a perspective view for illustrating an overall configuration of the heat exchanger 1 to which the fan guide unit 4 according to the present embodiment is attached.

The heat exchanger 1 is arranged, for example, in the front portion (for example, in the engine room) of a vehicle and cools compressed air or cooling water circulating in the heat exchanger 1 by cooling air taken in from the front of the vehicle. A cooling fan (not illustrated) for sucking the cooling air is arranged behind the heat exchanger 1 in order to increase the amount of heat radiation. The fan guide unit 4 is arranged between the heat exchanger 1 and the cooling fan in the front-rear direction. The fan guide unit 4 is attached to a rear surface of the heat exchanger 1. The cooling air is sucked in from the front of the heat exchanger 1, passes through the heat exchanger 1 and the fan guide unit 4 in this order, and flows out to the rear through the cooling fan. The fan guide unit 4 increases the efficiency (that is, the cooling efficiency of the heat exchanger 1) of blowing the cooling air to the heat exchanger 1 by rectifying the cooling air sucked by the cooling fan.

The heat exchanger 1 has an intercooler 2 and a radiator 3. The intercooler 2 and the radiator 3 are installed in order in a flow direction of the cooling air. The intercooler 2 cools the compressed air from a supercharger which sends the compressed air to an engine. The radiator 3 cools the cooling water for cooling a heat source such as the engine. The heat exchanger 1 is not limited to the one composed of the intercooler 2 and the radiator 3. Further, although the intercooler 2 is arranged on the front side of the radiator 3, it may be arranged on the rear side of the radiator 3.

The fan guide unit 4 has a fan guide 5 and a fan cover 6. The fan guide 5 is attached so as to cover a rear surface of the radiator 3 and rectifies the cooling air sucked by a cooling fan. The fan cover 6 connects the fan guide 5 and a fan ring (not illustrated) surrounding the cooling fan to prevent the flow of cooling air.

### <Overall Configuration of Fan Guide Unit>

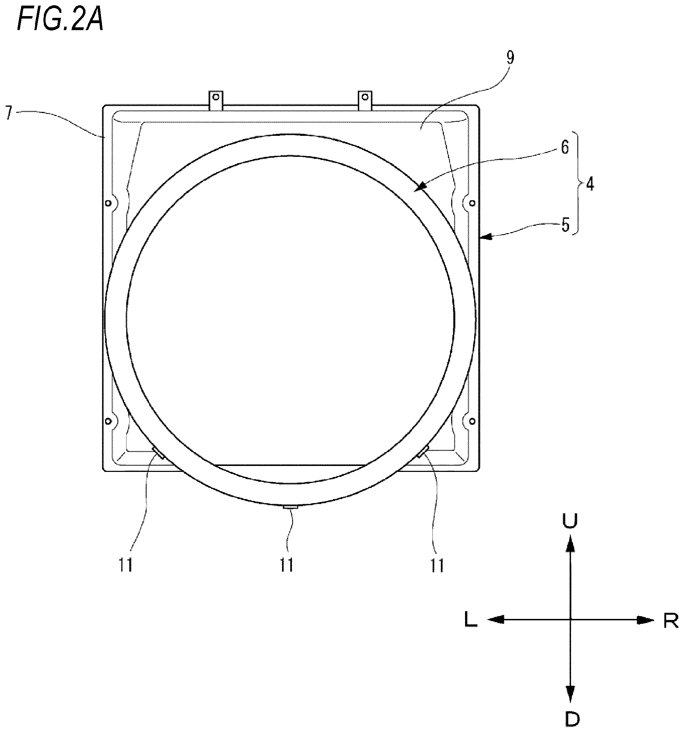

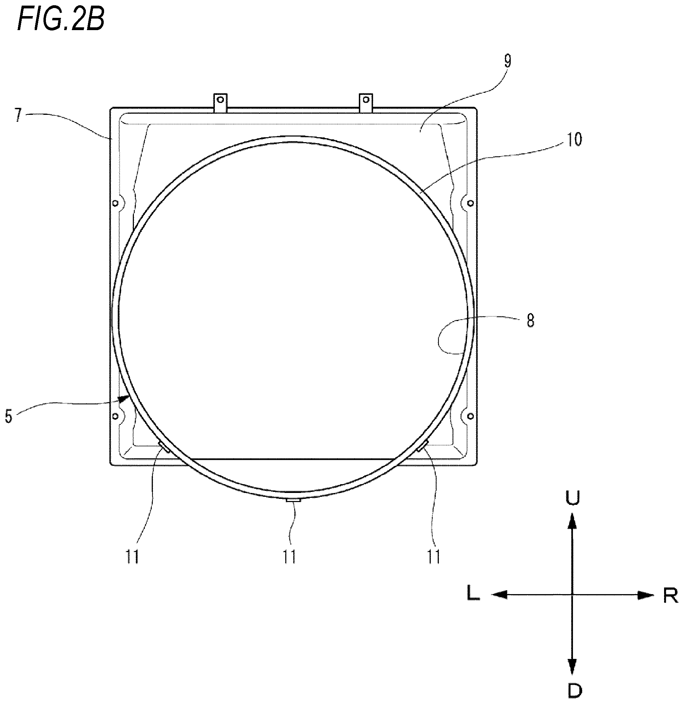

Next, the configuration of the fan guide unit 4 according to the present embodiment will be described with reference to Figs. 2A and 2B.

Fig. 2A is a diagram illustrating the fan guide unit 4 according to the present embodiment. Fig. 2B is a diagram illustrating a state (fan guide 5) in which the fan cover 6 is removed from the fan guide unit 4 of Fig. 2A. Figs. 2A and 2B are rear views.

The fan guide 5 is made of synthetic resin and has a substantially square shape when viewed from the front. A substantially circular opening portion 8 for guiding the cooling air from the radiator 3 to the rear is provided on a rear surface of the fan guide 5 on the cooling fan side. The center of the opening portion 8 is slightly downwardly offset from the center of the rear surface of the fan guide 5. The front surface of the fan guide 5 on the radiator 3 side is open as a cooling air passage. The fan guide 5 forms a space for rectifying the cooling air sucked by the cooling fan by a guide body 9 connecting a peripheral edge of the end portion on the radiator 3 side and a peripheral edge of the opening portion 8. A direction along a circumference of the opening portion 8 may be referred to as a "circumferential direction" and a direction along a radius of the opening portion 8 may be referred to as a "radial direction". Further, in the "radial direction", a direction from the outside of the opening portion 8 toward a center position is called a "center direction" and a direction from the center position to the outside of the opening portion 8 may be referred to as a "centrifugal direction". In the accompanied drawings, an arrow C indicates the circumferential direction and an arrow RA indicates the radial direction.

The fan guide 5 has a flange portion 7 on the peripheral edge of the end portion on the radiator 3 side. The flange portion 7 is provided with a mounting hole and a mounting portion. The fan guide 5 is fixed to the rear surface of the radiator 3 by bolts or the like at the flange portion 7.

The fan cover 6 is attached to the peripheral edge of the opening portion 8 of the fan guide 5. The fan cover 6 is made of an elastic body (for example, rubber).

The fan guide 5 has a substantially square shape in front view corresponding to the shape of the rear surface of the radiator 3, but the fan guide 5 is not limited to this. As long as the shape of the end attached to the heat exchanger 1 corresponds to the shape of heat exchanger 1, the shape is not particularly limited. Further, the shape and position of the opening portion 8 are not limited to this. The shape and position of the opening portion 8 are not particularly limited as long as they correspond to the shape and position of the cooling fan and the fan ring.

### <Mounting Structure of Fan Guide and Fan Cover>

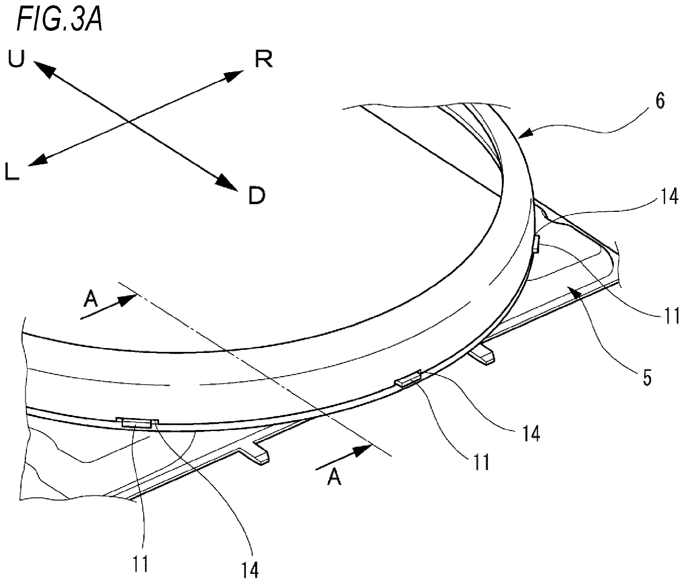

Next, a mounting structure of the fan guide 5 and the fan cover 6 according to the present embodiment will be described mainly with reference to Figs. 3A to 5B.

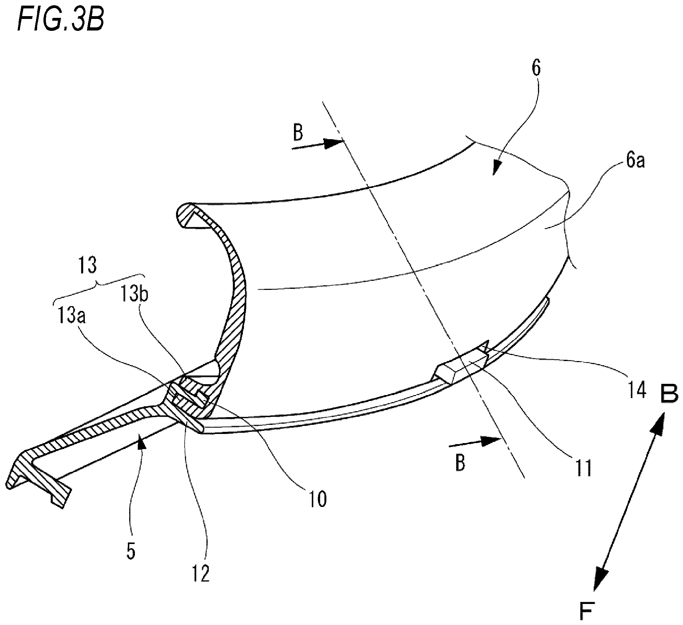

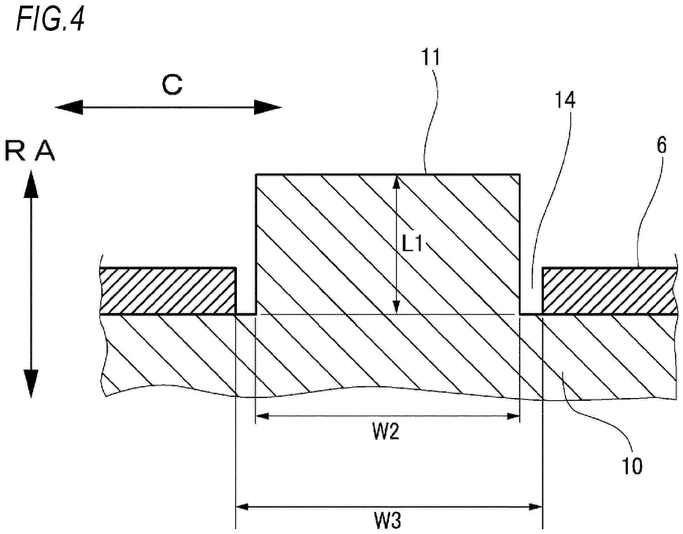

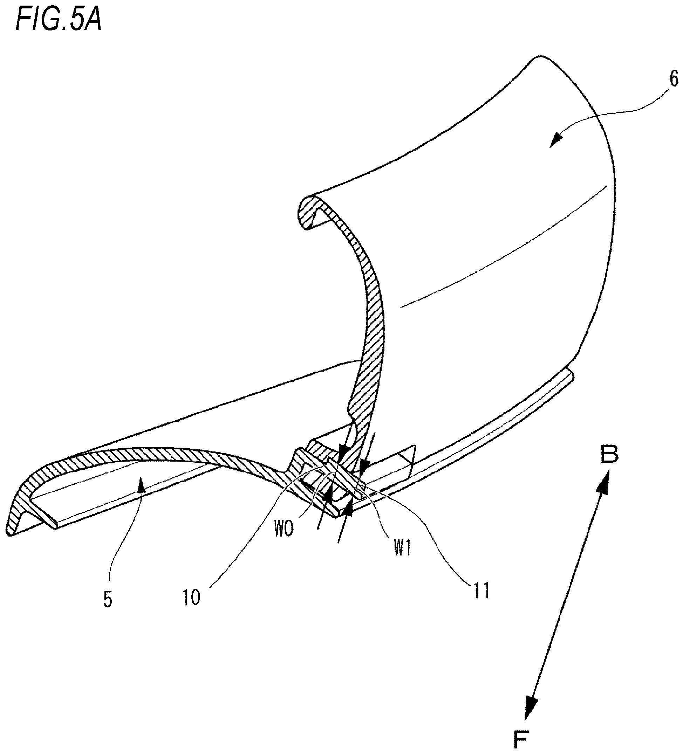

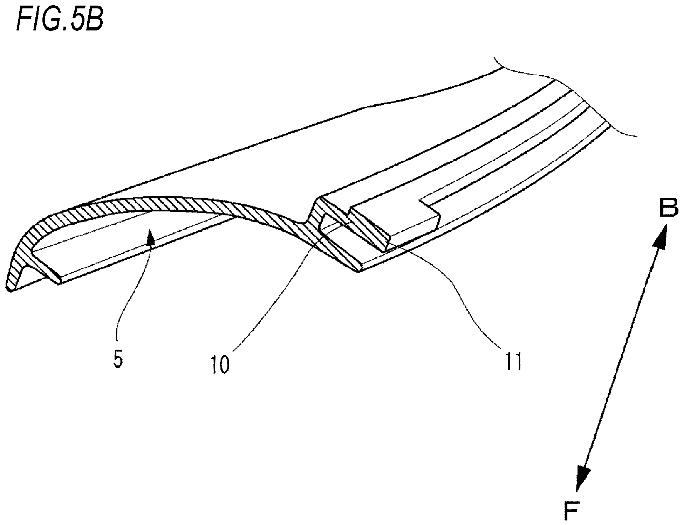

Fig. 3A is a partially enlarged perspective view of a lower part of the fan guide unit 4 of Fig. 2A. Fig. 3B is a cross-sectional perspective view taken along the line A-A of the fan guide unit 4 of Fig. 3A. Fig. 4 is a schematic view for illustrating a protrusion of the fan guide. Fig. 4 is a schematic view illustrating the shape of a cross section of the protrusion in the circumferential direction. Fig. 5A is a cross-sectional perspective view taken along the line B-B of the fan guide unit 4 of Fig. 3B. Fig. 5B is a cross-sectional perspective view illustrating a state (fan guide 5) in which the fan cover 6 is removed from the fan guide unit 4 of Fig. 5A.

As illustrated in Fig. 3B, the fan guide 5 has a fitting portion 10 and a ridge portion 12 on the peripheral edge of the opening portion 8. The fitting portion 10 is provided on the peripheral edge of the opening portion 8 so as to extend along the circumferential direction and in the centrifugal direction. The tip of the fitting portion 10 is bent rearward and the cross section orthogonal to the circumferential direction is substantially L-shaped. The ridge portion 12 is provided at a position on the front side of the fitting portion 10 on the peripheral edge of the opening portion 8 so as to extend along the circumferential direction and in the centrifugal direction.

As illustrated in Fig. 3B, the fan cover 6 has an annular portion 6a and a fitted portion 13. The annular portion 6a is configured to surround a part of the fan ring. The rear portion of the annular portion 6a extends in the center direction and its tip fits with the fan ring. The fitted portion 13 is provided on the peripheral edge of the front end portion of the annular portion 6a. The fitted portion 13 has a front fitted portion 13a and a rear fitted portion 13b provided so as to extend along the circumferential direction and in the center direction. The fitted portion 13 is fitted to the fitting portion 10 so that the fitting portion 10 is interposed between the front fitted portion 13a and the rear fitted portion 13b from the front and back. The tip of the rear fitted portion 13b is bent forward and the cross section orthogonal to the circumferential direction is substantially L-shaped. Also, the tip of the rear fitted portion 13b engages with a substantially L-shaped tip of the fitting portion 10.

The fitting portion 10 of the fan guide 5 is fitted so as to be interposed from the front and back by the fitted portion 13 of the fan cover 6. Such a mounting structure can prevent the fan cover 6 from moving backward from the fan guide 5. Further, since the tip of the fitting portion 10 is locked to the tip of the rear fitted portion 13b, it is possible to prevent the fan cover 6 from coming off the fan guide 5 in the centrifugal direction. Further, since the ridge portion 12 is provided parallel to the fitting portion 10, the ridge portion 12 can guide the fitted portion 13 in the center direction when the fitted portion 13 is fitted to the fitting portion 10.

In the present embodiment, the fan guide 5 further has at least one protrusion 11 provided on the fitting portion 10 and the fan cover 6 has at least one through-hole 14 provided in the fitted portion 13 corresponding to the protrusion 11. The protrusion 11 and the through-hole 14 can suppress the rotation of the fan cover 6 due to engine vibration or the like.

For example, as illustrated in Fig. 3A, the fan guide 5 has a plurality of (three in this example) protrusions 11. The three protrusions 11 are provided in a lower half area of the fan guide 5. One protrusion 11 is provided at the bottom (an example of a lower part) of the peripheral edge of the opening portion 8 (see Fig. 2B) and two protrusions 11 are provided at predetermined intervals on the left and right sides thereof. The fan cover 6 has a plurality of (three in this example) through-holes 14 corresponding to the protrusions 11 of the fan guide 5.

As illustrated in Fig. 4, the protrusion 11 has a substantially rectangular shape in the cross section in the circumferential direction and is formed so that a width W2 in the circumferential direction is larger than a length L1 in the radial direction. Also, as illustrated in Figs. 5A and 5B, the protrusion 11 is formed so that a width W1 in the front-rear direction is the same as a width WO in the front-rear direction at the tip of the fitting portion 10 in the radial and front-rear cross sections. The protrusion 11 protrudes in the centrifugal direction from the tip of the fitting portion 10 over a predetermined length in the circumferential direction.

As illustrated in Fig. 4, the through-hole 14 is formed so that a width W3 in the circumferential direction is set to be larger than the width W2 in the circumferential direction on the fitting portion 10 side of the protrusion 11 of the fan guide 5. Further, the width of the through-hole 14 in the front-rear direction is formed to be the same as the width of the protrusion 11 in the front-rear direction. When the fan cover 6 is attached to the fan guide 5, the width of the through-hole 14 in the front-rear direction is the same as the width of the protrusion 11 in the front-rear direction, so that the protrusion 11 fits into the through-hole 14.

In the work of attaching the fan cover 6 to the fan guide 5, first, an operator determines a position of the fan cover 6 in the rotation direction (circumferential direction) with respect to the fan guide 5 so that the through-hole 14 and the protrusion 11 correspond to each other. Next, the protrusion 11 located at the bottom of the fan guide 5 is fitted into the through-hole 14, and in the surrounding area, the fitted portion 13 is fitted into the fitting portion 10 so that the fitting portion 10 is interposed between the fitted portion 13 from the front-rear direction. Also, if necessary, an operator inserts the protrusion 11 into the through-hole 14 while extending the fan cover 6 in the front-rear direction against the restoring force, and then the operator fits the protrusion 11 into the through-hole 14 while restoring the fan cover 6.

Then, if necessary, the operator fits the fitted portion 13 into the fitting portion 10 from the bottom to the top while extending the fan cover 6 in the circumferential direction against the restoring force and restoring the fan cover 6. In the middle, the remaining two protrusions 11 are fitted into the through-hole 14. However, even when the positions of the two protrusions 11 and the through-hole 14 are slightly offset in the circumferential direction, the width of the through-hole 14 in the circumferential direction is wider than the width of the protrusion 11, and thus the protrusion 11 can be fitted into the through-hole 14. Then, all the parts of the fitted portion 13 in the circumferential direction are fitted into the fitting portion 10. This allows the fan cover 6 to be attached to the fan guide 5.

As described above, in the present embodiment, the rotation of the fan cover 6 can be suppressed by fitting the protrusion 11 provided in the fan guide 5 into the through-hole 14 provided in the fan cover 6.

Further, since the protrusion 11 extends in the centrifugal direction from the tip of the fitting portion 10, the direction in which the through-hole 14 is fitted to the protrusion 11 is the same as the direction in which the fitted portion 13 is fitted in the fitting portion 10. Therefore, the mounting workability of the fan cover 6 is improved.

Further, since the protrusion 11 has a substantially rectangular shape in the cross section in the circumferential direction and the width in the circumferential direction is larger than the length in the radial direction, the rigidity of the protrusion 11 in the rotation direction can be increased. In addition, it is possible to prevent the protrusion 11 from deviating from the through-hole 14 in the center direction.

Also, the circumferential width of through-hole 14 is larger than the circumferential width of the fitting portion side of the protrusion 11. Therefore, even when there is a circumferential misalignment or shape error between the through-hole 14 and the protrusion 11, the protrusion 11 can be fitted to the through-hole 14. In addition, the fitting portion 10 and the fitted portion 13 are fitted at both ends of the through-hole 14 in the circumferential direction. Therefore, even when there is a gap between the protrusion 11 and the through-hole 14, the gap is closed by the surrounding fitting portion 10 and fitted portion 13, so that the cooling air can be prevented from leaking from the gap.

Moreover, since the fan guide 5 has three protrusions 11, the rotation of the fan cover 6 can be further suppressed. Also, the three protrusions 11 are provided in the lower half area of fan guide 5. Since the installation work performed while extending the fan cover 6 itself is performed from the bottom of the fan guide 5, in the early stages of installation, the protrusion 11 is plugged into the through-hole 14 and caught, making it easy to install the fan cover.

### <Modification Example of Fan Guide Unit>

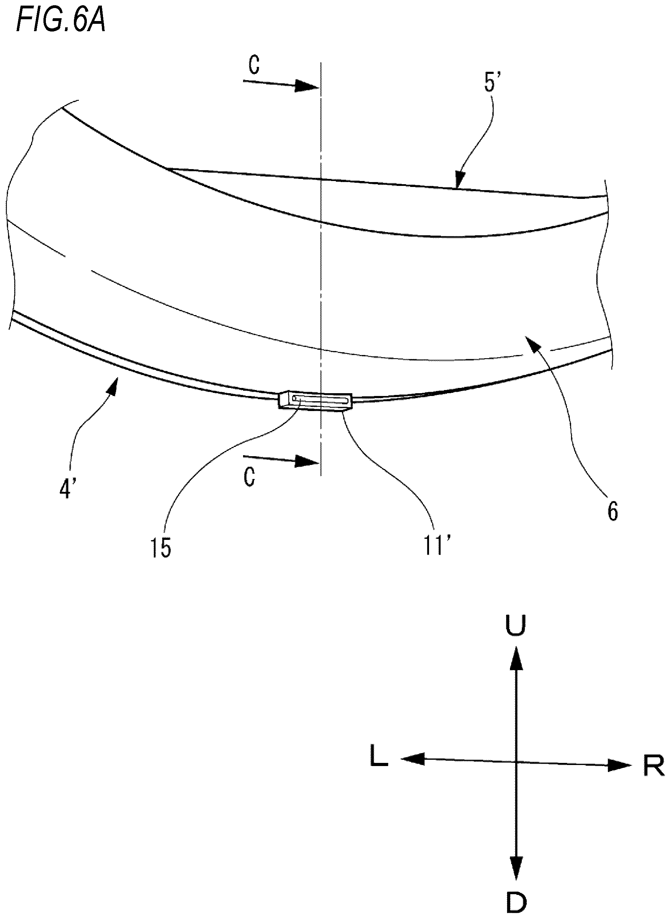

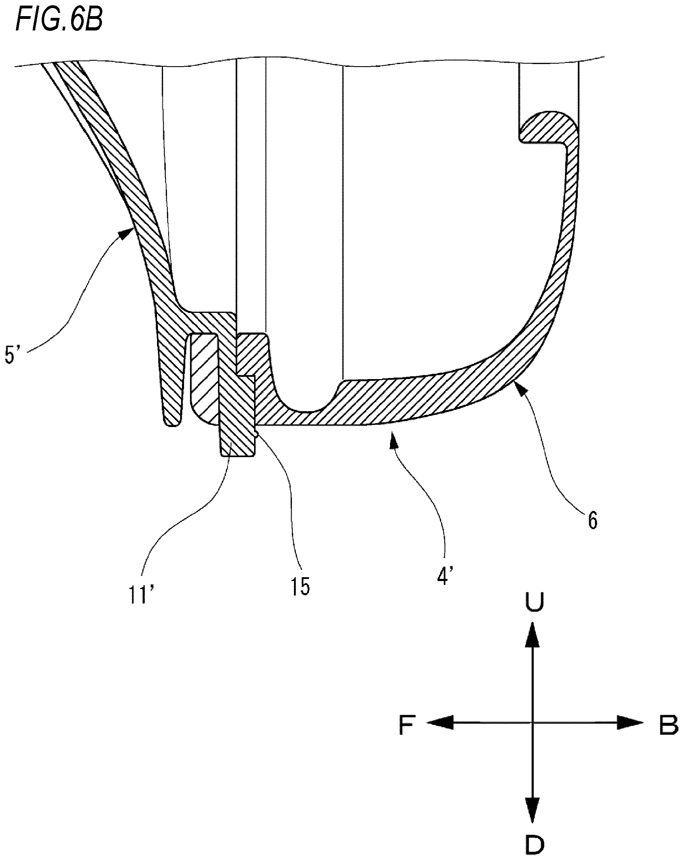

Next, a modification example of the fan guide unit 4 will be described. Fig. 6A is a partially enlarged perspective view of a lower part of a fan guide unit 4' related to the modification example. Fig. 6B is a cross-sectional view taken along the line C-C of the fan guide unit 4' of Fig. 6A. In the description of the modification example, the description of the member having the same reference numerals and letters as those of the member already described in the description of the present embodiment will be omitted for convenience of description. A first modification example is different from the fan guide 5 of the present embodiment in that a protrusion 11' of a fan guide 5' has a rib 15.

The protrusion 11' of the fan guide 5' has the rib 15 extending circumferentially on a surface on the fan cover 6 side. When the fan cover 6 is attached to the fan guide 5', the rib 15 is provided at a position where the entire rib 15 is exposed from the fan cover 6 in a state where the fitted portion 13 is normally fitted to the fitting portion 10.

As described above, since the protrusion 11' has the rib 15, an operator performing the mounting work can confirm whether the rib 15 is visible after the fan cover 6 is mounted. Therefore, the operator can determine whether the fan cover 6 is correctly attached to the fan guide 5'. In addition, the rib 15 can prevent the protrusion 11' from coming out of the through-hole 14 in the radial direction.

When the fan cover 6 is attached to the fan guide 5', the number, location, and shape of the rib 15 are not particularly limited as long as at least a part of the rib 15 is exposed from the fan cover 6.

### <Modification Example of Protrusion of Fan Guide>

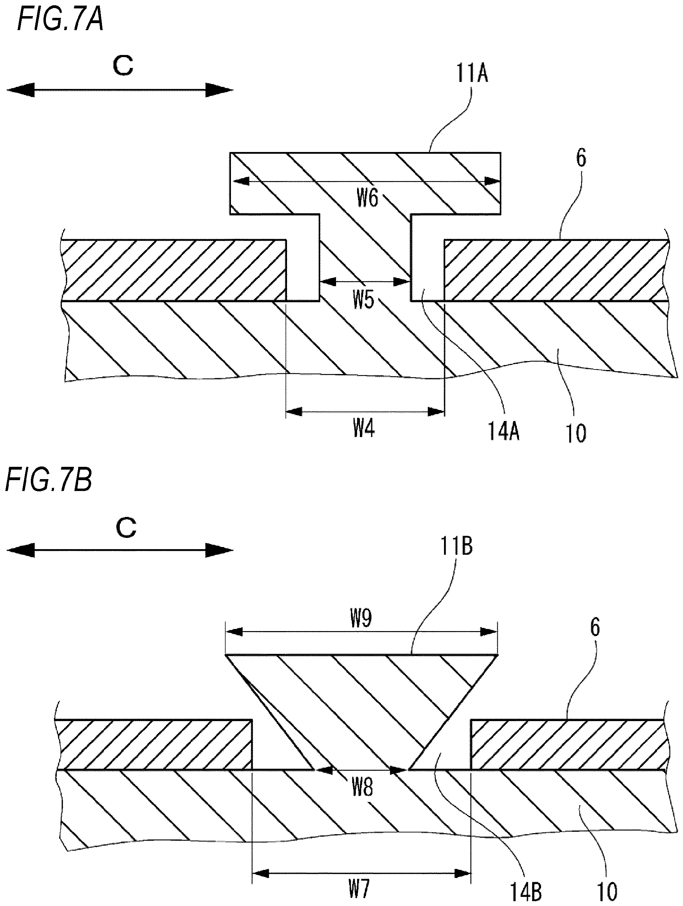

Next, a modification example of the protrusion 11 of the fan guide 5 will be described. Figs. 7A to 7C are schematic views for explaining modification examples of protrusions 11A to 11C. Figs. 7A to 7C are schematic views illustrating the shape of the cross sections of the protrusions 11A to 11C in the circumferential direction.

In the cross section in the circumferential direction, in the protrusion 11A of Fig. 7A, a width W6 in the circumferential direction on the tip side is wider than a width W5 in the circumferential direction on the fitting portion 10 side, and thus the protrusion 11A has a T shape. In the cross section in the circumferential direction, in the through-hole 14A, a circumferential width W4 is formed to be larger than the width W5 in the circumferential direction on the fitting portion 10 side of the protrusion 11A and smaller than the width W6 in the circumferential direction on the tip side.

In the cross section in the circumferential direction, in the protrusion 11B of Fig. 7B, a width in the circumferential direction gradually increases from the fitting portion 10 side to the tip side. In the cross section in the circumferential direction, in the through-hole 14B, a width W7 in the circumferential direction is formed so as to be larger than a width W8 in the circumferential direction on the fitting portion 10 side of the protrusion 11A and smaller than a width W9 in the circumferential direction on the tip side.

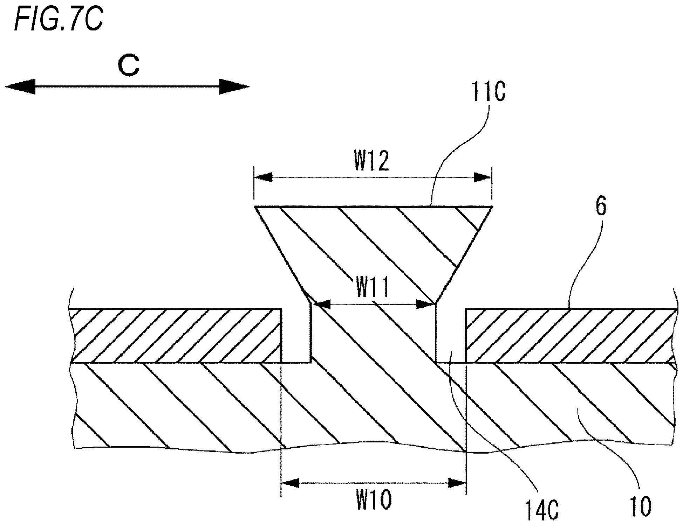

The protrusion 11C in Fig. 7C has the same width in the circumferential direction from the fitting portion 10 side to a predetermined position in the centrifugal direction in the cross section in the circumferential direction and the width in the circumferential direction gradually increases from the predetermined position toward the tip side. In the cross section in the circumferential direction, in a through-hole 14C, a width W10 in the circumferential direction is formed so as to be larger than a width W11 in the circumferential direction at a predetermined position of the protrusion 11A and smaller than a width W12 in the circumferential direction on the tip side.

As described above, in the cross section in the circumferential direction, in the protrusions 11A to 11C of the fan guide 5, the width in the circumferential direction on the tip side is larger than the width in the circumferential direction on the fitting portion 10 side. In addition, the circumferential width of the through-holes 14A to 14C of the fan cover 6 is larger than the minimum circumferential width of the protrusions 11A to 11C of the fan guide and smaller than the maximum circumferential width of the protrusions 11A to 11C of the fan guide 5. Therefore, even when a displacement or shape error occurs in the circumferential direction between the through-holes 14A to 14C and the protrusions 11A to 11C, the protrusions 11A to 11C can be fitted to the through-holes 14A to 14C. In addition, since the fitting portion 10 and the fitted portion 13 are fitted at both ends of the through-holes 14A to 14C in the circumferential direction, even when there is a gap between the protrusions 11A to 11C and the through-holes 14A to 14C, the gap is closed by the surrounding fitting portion 10 and fitted portion 13. As a result, it is possible to prevent the cooling air from leaking from the gap. Also, it is possible to further suppress the deviation of the protrusions 11A to 11C from the through-holes 14A to 14C in the centrifugal direction.

### <Other Embodiments>

Although the embodiment of the present disclosure is described above, it goes without saying that the technical scope of the present disclosure should not be construed as being limited by the description of the present embodiment. It will be appreciated by those skilled in the art that the present embodiment is merely an example and that various embodiments can be modified within the scope of the invention described in the claims. The technical scope of the present disclosure should be determined based on the scope of the invention described in the claims.

In the embodiment described above, the fan guide 5 has the ridge portion 12 on the periphery of the opening portion 8, but the present disclosure is not limited to this. The fan guide 5 does not have to have the ridge portion 12.

Further, in the embodiment described above, the plurality of protrusions 11 have the same shape, but are not limited thereto. The plurality of protrusions 11 may have different shapes.

Further, in the embodiment described above, the protrusion 11 is provided at the lower part of the fan guide 5, but is not limited thereto. For example, when the fan cover 6 is attached to the fan guide 5 from above, the protrusion 11 may be provided at the upper part of the fan guide5. Also, the fan guide 5 has three protrusions 11, but is not limited to this. Forexample, the fan guide 5 may have one or two protrusions, or four or more protrusions. Also, a plurality of (three in this example) protrusions 11 are provided in the lower half area of the fan guide 5, but are not limited to this. For example, one protrusion 11 may be located in the lower half area of the fan guide 5 and the remaining protrusion 11 may be located in the upper half area of the fan guide 5.

Further, in the embodiment described above, the protrusion 11 is formed so as to protrude in the centrifugal direction perpendicular to the circumferential direction from the tip of the fitting portion 10, but is not limited thereto. For example, it may project in a direction inclined at a predetermined angle with respect to the radial direction. It is preferable that the protrusion 11 does not protrude into a space formed inside the guide body 9. When the protrusion 11 projects into the space formed inside the guide body 9, it is desirable to project it to a location that does not interfere with the flow of cooling air.

This application is based on Japanese Patent Application No. 2018-180062 filed on September 26, 2018.

## Claims

1. A fan guide unit for a heat exchanger, comprising:
a fan guide (5) including: a fitting portion (10) provided along a circumferential direction on a periphery of an opening portion; and at least one protrusion (11) provided on the fitting portion and protruding in a direction intersecting the circumferential direction; and
a fan cover (6) including a fitted portion (13) provided corresponding to the fitting portion (10) of the fan guide, wherein
the fitted portion of the fan cover is provided with at least one through-hole (14) provided corresponding to the protrusion of the fan guide, wherein:
the opening portion of the fan guide is substantially circular;
the fitting portion (10) of the fan guide (5) extends in a radial direction from the periphery of the opening portion; and
the protrusion (11) extends in the radial direction from a tip of the fitting portion (10) of the fan guide (5).

2. The fan guide unit according to claim 1, wherein:
the protrusion (11) of the fan guide has a substantially rectangular shape in a cross section in the circumferential direction; and
a width in the circumferential direction is larger than a length in the radial direction.

3. The fan guide unit according to claim 1 or 2, wherein:
the fan cover has an annular portion (6a) and the fitted portion (13) is provided on a periphery of the annular portion along the circumferential direction; and
a width in the circumferential direction of the through-hole of the fan cover is greater than a width in the circumferential direction of the fitting portion side of the protrusion of the fan guide.

4. The fan guide unit according to claim 1, wherein:
the fan cover has an annular portion and the fitted portion (13) is provided on a periphery of the annular portion along the circumferential direction;
the protrusion of the fan guide has a larger width in the circumferential direction on a tip side than a width in the circumferential direction on the fitting portion side in a cross section in the circumferential direction; and
the through-hole (14) of the fan cover has a width in the circumferential direction larger than a minimum width in the circumferential direction of the protrusion of the fan guide and smaller than a maximum width in the circumferential direction of the protrusion in the fan guide.

5. The fan guide unit according to any one of claims 1 to 4, wherein
the protrusion of the fan guide has a rib (15) and at least a part of the rib is exposed from the fan cover when the fan cover is attached to the fan guide.

6. The fan guide unit according to claim 5, wherein
the rib extends in the circumferential direction and the entire rib is exposed from the fan cover when the fan cover is attached to the fan guide.

7. The fan guide unit according to any one of claims 1 to 6, wherein:
the fan cover is made of an elastic body; and
the protrusion of the fan guide is located in a lower part of the fan guide.

8. The fan guide unit according to claim 7, wherein
the fan guide has three of the protrusions and the three protrusions are provided in a lower half area of the fan guide.

## Patentansprüche

1. Lüfterführungseinheit für einen Wärmetauscher, umfassend:
eine Lüfterführung (5), die Folgendes beinhaltet: einen Passabschnitt (10), der entlang einer Umfangsrichtung an einem Umfang eines Öffnungsabschnitts bereitgestellt ist; und mindestens einen Vorsprung (11), der an dem Passabschnitt bereitgestellt ist und in einer Richtung hervorsteht, die die Umfangsrichtung schneidet; und
eine Lüfterabdeckung (6), die einen Passabschnitt (13) beinhaltet, der entsprechend dem Passabschnitt (10) der Lüfterführung bereitgestellt ist, wobei
der Passabschnitt der Lüfterabdeckung mit mindestens einem Durchgangsloch (14) versehen ist, das entsprechend dem Vorsprung der Lüfterführung bereitgestellt ist, wobei: der Öffnungsabschnitt der Lüfterführung im Wesentlichen kreisförmig ist;
der Befestigungsabschnitt (10) der Lüfterführung (5) sich in einer radialen Richtung von dem Umfang des Öffnungsabschnitts erstreckt; und
sich der Vorsprung (11) in radialer Richtung von einer Spitze des Passabschnitts (10) der Lüfterführung (5) erstreckt.

2. Lüfterführungseinheit nach Anspruch 1, wobei:
der Vorsprung (11) der Lüfterführung eine im Wesentlichen rechteckige Form in einem Querschnitt in Umfangsrichtung aufweist; und
eine Breite in Umfangsrichtung größer ist als eine Länge in radialer Richtung.

3. Lüfterführungseinheit nach Anspruch 1 oder 2, wobei:
die Lüfterabdeckung einen ringförmigen Abschnitt (6a) aufweist und der Passabschnitt (13) an einem Umfang des ringförmigen Abschnitts entlang der Umfangsrichtung bereitgestellt ist; und
eine Breite in Umfangsrichtung des Durchgangslochs der Lüfterabdeckung größer ist als eine Breite in Umfangsrichtung der Seite des Passabschnitts des Vorsprungs der Lüfterführung.

4. Lüfterführungseinheit nach Anspruch 1, wobei:
die Lüfterabdeckung einen ringförmigen Abschnitt aufweist und der Passabschnitt (13) an einem Umfang des ringförmigen Abschnitts entlang der Umfangsrichtung bereitgestellt ist;
der Vorsprung der Lüfterführung eine größere Breite in Umfangsrichtung auf einer Spitzenseite als eine Breite in der Umfangsrichtung auf der Seite des Passabschnitts in einem Querschnitt in der Umfangsrichtung aufweist; und
das Durchgangsloch (14) der Lüfterabdeckung eine Breite in Umfangsrichtung aufweist, die größer ist als eine minimale Breite in Umfangsrichtung des Vorsprungs der Lüfterführung und kleiner ist als eine maximale Breite in Umfangsrichtung des Vorsprungs in der Lüfterführung.

5. Lüfterführungseinheit nach einem der Ansprüche 1 bis 4, wobei
der Vorsprung der Lüfterführung eine Rippe (15) aufweist und zumindest ein Teil der Rippe von der Lüfterabdeckung freigelegt ist, wenn die Lüfterabdeckung an der Lüfterführung angebracht ist.

6. Lüfterführungseinheit nach Anspruch 5, wobei
sich die Rippe in Umfangsrichtung erstreckt und die gesamte Rippe von der Lüfterabdeckung freigelegt ist, wenn die Lüfterabdeckung an der Lüfterführung angebracht ist.

7. Lüfterführungseinheit nach einem der Ansprüche 1 bis 6, wobei:
die Lüfterabdeckung aus einem elastischen Körper gefertigt ist; und
sich der Vorsprung der Lüfterführung in einem unteren Teil der Lüfterführung befindet.

8. Lüfterführungseinheit nach Anspruch 7, wobei
die Lüfterführung drei der Vorsprünge aufweist und die drei Vorsprünge in einem unteren Halbbereich der Lüfterführung bereitgestellt sind.

## Revendications

1. Unité de guidage de ventilateur pour un échangeur de chaleur comprenant :
un guide de ventilateur (5) comprenant : une partie d'ajustement (10) prévue le long d'une direction circonférentielle sur une périphérie d'une partie d'ouverture ; et au moins une saillie (11) prévue sur la partie d'ajustement, et faisant saillie dans une direction coupant la direction circonférentielle ; et
un couvercle de ventilateur (6) comprenant une partie ajustée (13) prévue en correspondance de la partie d'ajustement (10) du guide de ventilateur, dans laquelle :
la partie ajustée du couvercle de ventilateur est prévue avec au moins un trou débouchant (14) prévu en correspondance de la saillie du guide de ventilateur, dans laquelle :
la partie d'ouverture du guide de ventilateur est sensiblement circulaire ;
la partie d'ajustement (10) du guide de ventilateur (5) s'étend dans une direction radiale à partir de la périphérie de la partie d'ouverture ; et
la saillie (11) s'étend dans la direction radiale à partir d'une pointe de la partie d'ajustement (10) du guide de ventilateur (5).

2. Unité de guidage de ventilateur selon la revendication 1, dans laquelle :
la saillie (11) du guide de ventilateur a une forme sensiblement rectangulaire dans une section transversale dans la direction circonférentielle ; et
une largeur dans la direction circonférentielle est supérieure à une longueur dans la direction radiale.

3. Unité de guidage de ventilateur selon la revendication 1 ou 2, dans laquelle :
le couvercle de ventilateur a une partie annulaire (6a) et la partie ajustée (13) est prévue sur une périphérie de la partie annulaire le long de la direction circonférentielle ; et
une largeur dans la direction circonférentielle du trou débouchant du couvercle de ventilateur est supérieure à une largeur dans la direction circonférentielle du côté de la partie d'ajustement de la saillie du guide de ventilateur.

4. Unité de guidage de ventilateur selon la revendication 1, dans laquelle :
le couvercle de ventilateur a une partie annulaire et la partie ajustée (13) est prévue sur une périphérie de la partie annulaire le long de la direction circonférentielle ;
la saillie du guide de ventilateur a une plus grande largeur dans la direction circonférentielle sur un côté de pointe qu'une largeur dans la direction circonférentielle du côté de la partie d'ajustement dans une section transversale dans la direction circonférentielle ; et
le trou débouchant (14) du couvercle de ventilateur a une largeur, dans la direction circonférentielle, supérieure à une largeur minimum dans la direction circonférentielle de la saillie du guide de ventilateur et inférieure à une largeur maximum dans la direction circonférentielle de la saillie dans le guide de ventilateur.

5. Unité de guidage de ventilateur selon l'une quelconque des revendications 1 à 4, dans laquelle :
la saillie du guide de ventilateur a une nervure (15) et au moins une partie de la nervure est exposée à partir du couvercle de ventilateur lorsque le couvercle de ventilateur est fixé au guide de ventilateur.

6. Unité de guidage de ventilateur selon la revendication 5, dans laquelle :
la nervure s'étend dans la direction circonférentielle et toute la nervure est exposée à partir du couvercle de ventilateur lorsque le couvercle de ventilateur est fixé au guide de ventilateur.

7. Unité de guidage de ventilateur selon l'une quelconque des revendications 1 à 6, dans laquelle :
le couvercle de ventilateur est réalisé avec un corps élastique ; et
la saillie du guide de ventilateur est positionnée dans une partie inférieure du guide de ventilateur.

8. Unité de guidage de ventilateur selon la revendication 7, dans laquelle :
le guide de ventilateur a trois saillies et les trois saillies sont prévues dans une moitié inférieure du guide de ventilateur.
